# EUROPÄISCHE PATENTSCHRIFT

(11) **EP 1 664 633 B1**
(45) Veröffentlichungstag und Bekanntmachung des Hinweises auf die Patenterteilung: **30.11.2016**
(21) Anmeldenummer: 04765142.7
(22) Anmeldetag: 13.09.2004
(51) Int. Cl.: F24C 7/08, G06F 3/033

(54) **STEUERUNG FÜR EIN HAUSHALTGERÄT UND ANZEIGE VON INFORMATIONEN**
CONTROL FOR A DOMESTIC APPLIANCE AND DISPLAY OF INFORMATION
COMMANDE D'APPAREIL MENAGER ET AFFICHAGE D'INFORMATIONS

(30) Priorität: 12.09.2003 DE 10342321
(43) Veröffentlichungstag der Anmeldung: 07.06.2006
(73) Patentinhaber: BSH Hausgeräte GmbH, 81739 München (DE)
(72) Erfinder: PLANKL, Manfred, 83374 Traunwalchen (DE); ULMER, Michael, 83301 Traunreut (DE); ROGENHOFER, Hans, 83607 Holzkirchen (DE); BALK, Katja, 83355 Grabenstätt (DE)
(86) Internationale Anmeldenummer: PCT/EP2004/010223
(87) Internationale Veröffentlichungsnummer: WO 2005/026620

(56) Entgegenhaltungen:
- EP-A- 1 278 016
- DE-C- 19 832 757
- DE-U1- 20 203 117
- US-A- 6 080 972
- US-A1- 2003 098 888

## Beschreibung

Die vorliegende Erfindung betrifft eine Steuerung für ein Haushaltgerät, insbesondere ein Gargerät, mit einer Anzeigeeinheit zur Anzeige von Informationen, wobei die Steuerung die Anzeige der Informationen steuert und mit einem Auswahlelement zur Auswahl eines Garprogramms oder einer Betriebsart verbunden ist, sowie ein entsprechendes Verfahren zum Steuern eines Haushaltgeräts, insbesondere eines Gargeräts.

Eine derartige Steuerung ist aus DE 198 32 757 C2 bekannt. Dort ist eine Steuerung mit einer Bedieneinheit beschrieben, die mit einer grafischen Anzeigeeinrichtung, mehreren Funktions-Bedieneleinenten und mehreren Eingabe-Bedienelementen ausgestaltet ist. Jedem per Bedienelemente ist ein in seiner Anordnung und Ausdehnung festes oder variables Anzeigefeld der Anzeigeeinrichtung zugeordnet. Die Funktionsbelegung für jedes der Bedienelemente ist variabel und wird durch die Steuerung gesteuert. Die aktuelle Funktionsbelegung der Bedienelemente wird durch eine entsprechende Bezeichnung auf dem jeweils zugeordneten Anzeigefeld angezeigt. Somit wird einem Benutzer ein Funktionsmenü angezeigt, aus dem er durch Betätigen eines der Bedienelemente einen zugeordneten Menüpunkt auswählen kann. Für eine der Funktionsbelegungen ist ein Informationsmenüpunkt vorgesehen, so dass der Benutzer durch Betätigen des zugehörigen Bedienelements Informationen aufrufen kann, die dann auf der Anzeigeeinrichtung angezeigt werden.

Der Nachteil der in DE 198 32 757 C2 vorgeschlagenen Steuerung liegt darin, dass die Anzahl der Menüpunkte durch die Anzahl der Anzeigefelder bzw. durch die Anzahl der Bedienelemente begrenzt ist, und dass das Bedienelement zum Aufrufen der Informationen der Anzeigeeinrichtung zugeordnet ist. Somit ist es von der aktuellen Funktionsbelegung abhängig, ob dem Benutzer der Informationsmenüpunkt zur Verfügung steht oder nicht. D.h. der Benutzer kann nur dann Informationen aufrufen, wenn bei der aktuellen Funktionsbelegung einem der Bedienelemente der Informationsmenüpunkt zugeordnet ist.

Aus der deutschen Offenlegungsschrift DE 44 35 931 A1 ist eine Bedienungseinrichtung für Gargeräte mit einer eingebetteten Steuerung für die Regelung von Garprozessen bekannt, deren verschiedene Parameter durch Betätigungselemente am Gargerät einstellbar sind. Die Bedieneinrichtung ist gekennzeichnet durch eine externe Programmiereinheit, umfassend ein Handprogrammiergerät mit Klartextanzeige und Bedienerführung für die von der eingebetteten Steuerung der jeweiligen Gargeräte unabhängige Erstellung und Speicherung verschiedener Garprogramme, Diagnoseprogramme und Bedienfunktionen, die beliebig abrufbar, überprüfbar und änderbar sind, und Übertragung derselben auf jede eingebettete Steuerung jedes beliebigen Gargerätes.

Die US 6,080,972 A offenbart eine Vorrichtung zur automatischen Programmierung und Steuerung eines Ofens, wie zum Beispiel eines Backofens. Der Ofen und dessen Steuereinheit können über einen Computer mit einem Modem über große Distanzen ferngesteuert werden und über eine Telefonverbindung beidseitig Senden und Empfangen, um einen Kochfortschritt anzuzeigen, eine Kochsequenz zu ändern und/oder eine neue Programmsequenz vorzubereiten. Eine ergonomisch gestaltete Fernbedienung bietet eine interaktive intuitive Methode zur Programmierung der gewünschten Kochsequenzen. Die über einen Schalter gemachten Eingaben werden durch einen Mikroprozessor überwacht, der sich auf verschiedene vorprogrammierte Funktionen verteilt. Darüber hinaus unterstützen die Selbstanalyse und Selbstdiagnose den Benutzer dabei, die während des Betriebszyklus gespeicherten Zeiten und Temperaturen vor einem Stromausfall erneut anzuzeigen. Eine neuartig integrierte Ofenkonstruktion schont die Bodenfläche und die Bodenlüftungsanlage und spart Betriebskosten.

Der Erfindung liegt die Aufgabe zugrunde, eine benutzerfreundliche Steuerung für ein Haushaltgerät, insbesondere ein Gargerät, zur Verfügung zu stellen, die einfach zu handhaben ist.

Diese Aufgabe wird durch eine Steuerung für ein Haushaltgerät, insbesondere ein Gargerät, mit den Merkmalen von Anspruch 1 und ein Verfahren zum Steuern eines Haushaltgeräts, insbesondere eines Gargeräts, mit den Merkmalen von Anspruch 6 gelöst.

Die Steuerung weist ein separates, von dem Auswahlelement verschiedenes, Eingabeelement zum Aufrufen der Informationen auf, so dass ein Benutzer die Informationen durch Betätigen des separaten Eingabeelements aufrufen kann, die dann auf der Anzeigeeinheit angezeigt werden. Die Informationen können aus verschiedenen Betriebszuständen des Haushaltgeräts, insbesondere des Gargeräts, aufgerufen werden.

Somit stehen dem Benutzer während der verschiedenen Betriebszustände des Haushaltgeräts, insbesondere des Gargeräts, Informationen zur Verfügung, die er durch Betätigen des separaten Eingabeelements auf einfache Weise aufrufen kann. Darüber hinaus können durch die Steuerung abhängig von dem jeweiligen Betriebszustand unterschiedliche Informationen angezeigt werden. Dies hat den Vorteil, dass dem Benutzer situationsbezogene Informationen zur Verfügung stehen, wodurch die Benutzung des Gargeräts erleichtert wird.

Die Informationen liegen in Form von Menüpunkten eines Informationsmenüs vor. Die Steuerung weist eine Auswahleinrichtung zum Durchblättern der Menüpunkte auf, so dass die Menüpunkte von dem Benutzer mit der Auswahleinrichtung durchgeblättert werden können. Vorteilhafterweise entspricht die Auswahleinrichtung dem Eingabeelement. Somit können dem Benutzer eine Vielzahl von Informationen zur Verfügung gestellt werden, die von ihm auf einfache Weise durch mehrfache Betätigung des Eingabeelements aufgerufen werden können.

Um den Eingabeaufwand für den Benutzer gering zu halten, ist in einer bevorzugten Ausführungsform vorgesehen, dass durch die Steuerung für zumindest einen der Menüpunkte das Informationsmenü nach Ablauf einer vorgegebenen Zeitspanne automatisch verlassen wird. Auf diese Weise braucht der Benutzer, wenn er die von Ihm gewünschten Informationen erhalten hat keine weitere Eingabe tätigen. Das Informationsmenü wird automatisch nach Ablauf der vorgegebenen Zeitspanne verlassen und die Anzeigeeinrichtung kehrt in den selben Zustand wie vor dem Aufruf der Informationen zurück.

Gemäß einer bevorzugten Ausführungsform ist vorgesehen, dass nach Durchblättern aller Menüpunkte durch die Steuerung das Informationsmenü bei Betätigung des Eingabeelements verlassen wird. Auf diese Weise wird dem Benutzer vermittelt, dass zu dem aktuellen Betriebszustand keine weiteren Informationen zur Verfügung stehen.

Es werden durch die Steuerung als Informationen Zustandsparameter des Gargeräts und/oder Erläuterungen zu Gerätefunktionen und/oder Gebrauchsanleitungen anzeigt. Auf diese Weise kann der Benutzer beispielsweise über die Isttemperatur während des Aufheizen des Gargeräts oder über die Restwärme nach dem Beenden eines Garprozesses informiert werden. Insbesondere können auch die verwendeten Betriebsarten, wie beispielsweise Oberhitze oder Unterhitze für den Benutzer erläutert werden. Des weiteren können Hinweise über ein zu verwendendes Gargeschirr oder über eine optimale Einschubhöhe in einem Backofen gegeben werden.

Die Informationen können aus jedem Betriebszustand des Gargeräts aufgerufen werden. Somit stehen dem Benutzer jederzeit Informationen zur Verfügung.

Insbesondere betrifft die Erfindung ein Gargerät, wie z.B. einen Herd mit Backröhre, ein Mikrowellengerät oder einen Lichtwellenofen.

Die Erfindung und ihre Weiterbildungen werden nachfolgend anhand von Zeichnungen näher erläutert:

### Es zeigen

- Fig.1: eine schematische Darstellung einer erfindungsgemäßen Steuerung für ein Gargerät, und
- Fig.2: ein Eingabefeld für die Steuerung des Gargerätes

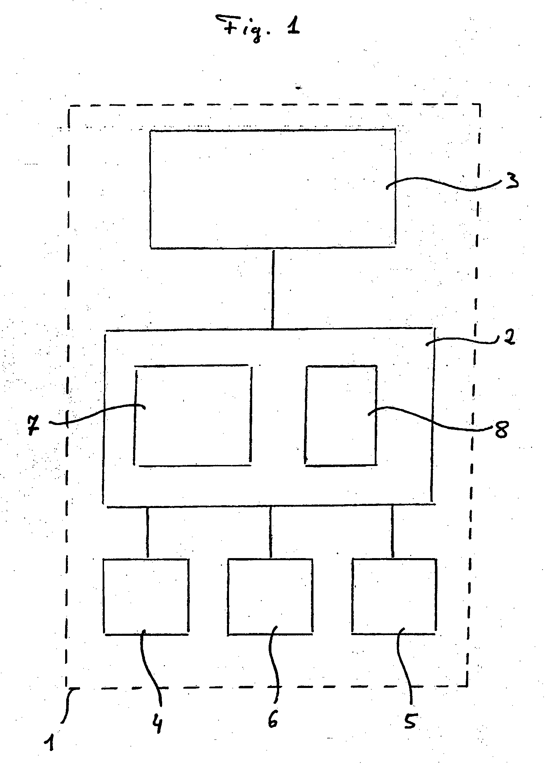

Eine in Figur 1 gezeigte erfindungsgemäße Steuerung 1 für ein Gargerät weist eine Steuerelektronik 2 auf, die mit einer Anzeigeeinheit 3, einem Auswahlelement 4 zur Auswahl eines Garprogramms oder einer Betriebsart, einem separaten Eingabeelement 5 zum Aufrufen von Informationen und einer Auswahleinrichtung 6 zum Durchblättern von Menüpunkten verbunden ist. Des weiteren weist die Steuerelektronik 2 Verbindungen zu den Aktoren des Gargerätes, wie beispielsweise diversen Heizelementen oder einem Lüfter und Verbindungen zu weiteren Eingabeelementen oder Sensoren auf, die hier nicht gezeigt sind. Die Steuerelektronik 2 umfasst eine Prozessoreinheit 7 und eine Speichereinheit 8.

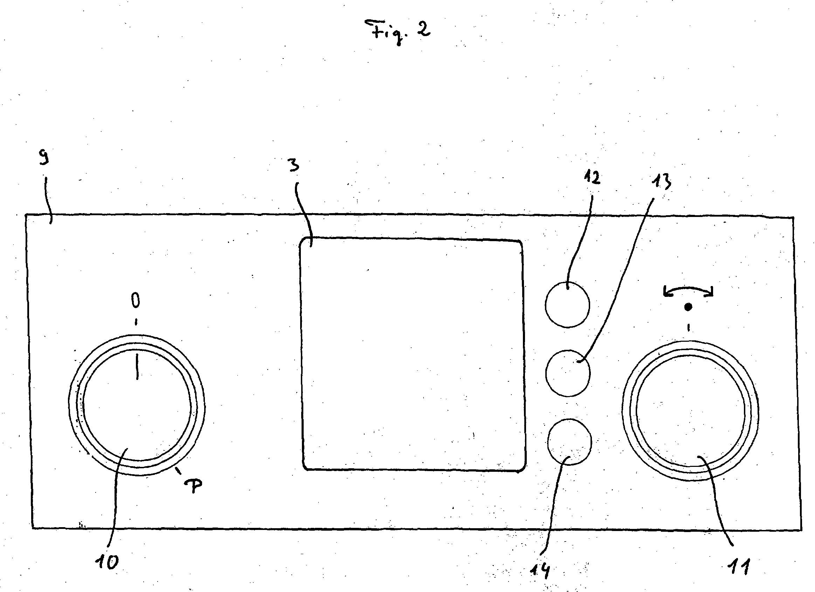

Figur 2 zeigt ein Eingabefeld 9 für die Steuerung 1 des Gargerätes, mit der Anzeigeeinheit 3, einem Auswahlelement 10 zur Aktivierung einer automatischen Programmauswahl oder zur Auswahl einer Betriebsart, einem Drehschalter 11, der einen Bit-Generator aufweist, einer Starttaste 12 zum Starten eines Garprozesses, einem Bestätigungselement 13 zur Bestätigung einer Programmauswahl, sowie einer Informationstaste 14 zum Aufrufen von Informationen.

Ein Benutzer wählt mit dem Auswahlelement eine Betriebsart, wie z.B. Oberhitze oder Unterhitze oder er stellt das Auswahlelement 10 auf die Schalterstellung P und aktiviert somit die automatische Programmauswahl. Mit dem Drehschalter 11, der entsprechend der Pfeilrichtungen in Figur 2 in beide Richtungen gedreht werden kann, wählt der Benutzer ein Garprogramm für ein Gericht an, wobei die Bezeichnung des jeweiligen Gerichts auf der Anzeigeeinheit 3 angezeigt wird. Durch Betätigung des Bestätigungselements 13 wird das Garprogramm ausgewählt. Durch Betätigung der Starttaste 12 wird der Garprozess gestartet.

Durch Betätigen der Informationstaste 14 kann der Benutzer jederzeit Informationen aufrufen, die auf der Anzeigeeinheit 3 angezeigt werden. Beispielsweise wird in der Aufheizphase des Gargeräts bei Betätigung der Informationstaste 14 eine aktuelle Isttemperatur des Gargerätes angezeigt, die mit Hilfe eines Temperatursensors ermittelt wird. Nach Beendigung des Garprozesses kann auf die gleiche Weise von dem Benutzer die Restwärme des Gargerätes abgerufen werden. D.h. durch Betätigen der Informationstaste 14 ist es dem Benutzer möglich aktuelle Zustandsparameter des Gargeräts aufzurufen, die z.B. durch Sensoren oder auf andere Weise ermittelt werden.

Des weiteren kann der Benutzer beispielsweise bei der Auswahl eines automatischen Garprogramms mit der Informationstaste 14 Informationen zu dem jeweiligen Garprogramm aufrufen, wie z.B. Hinweise über ein zu verwendendes Gargeschirr oder über eine optimale Einschubhöhe eines Garblechs bei einem Backofen. Es können auch Informationen zu einer ausgewählten Betriebsart aufgerufen werden, wie z.B. bei Ober-/Unterhitze der Hinweis des traditionellen Backen oder Bratens. Für Gerätefunktionen können Gebrauchsanleitungen oder Erläuterungen aufgerufen werden, wie z.B. bei einer Gardauerfunktion der Hinweis, dass der Garprozess nach Ablauf der eingestellten Gardauer beendet wird. Diese Informationen sind typischerweise in der Speichereinheit 8 abgespeichert und werden über die Prozessoreinheit 7 situationsbezogen nach Betätigung der Informationstaste 14 aufgerufen und auf der Anzeigeeinheit 3 angezeigt.

Die Informationen liegen in Form eines Informationsmenüs vor. Der Benutzer kann nach Betätigen der Informationstaste 14 mit Hilfe des Drehschalters 11 die Menüpunkte des Informationsmenüs durchblättern. Anstelle des Drehschalters 11 können bei einer alternative Möglichkeit, die Menüpunkte des Informationsmenüs durch mehrfaches Betätigen der Informationstaste 14 durchgeblättert werden. In diesem Fall entspricht dann die Auswahleinrichtung 6 dem Eingabeelement 5, nämlich der Informationstaste 14. Wird bei einem der Menüpunkte des Informationsmenüs die Auswahleinrichtung 6 für eine vorgegebene Zeitspanne nicht betätigt, so wird das Informationsmenü automatisch verlassen und die Anzeigeeinrichtung 3 kehrt in den Zustand vor Betätigung der Informationstaste 14 zurück. Das Informationsmenü wird auch dann verlassen, wenn alle der zur Verfügung stehenden Menüpunkte durchgeblättert wurden und die Auswahleinrichtung 6 ein weiteres Mal Betätigt wird.

### Bezugszeichenliste

- 1: Steuerung
- 2: Steuerelektronik
- 3: Anzeigeeinrichtung
- 4: Auswahlelement zur Auswahl eines Garprogramms oder einer Betriebsart
- 5: separates Eingabeelement zur zum Aufrufen von Informationen
- 6: Auswahleinrichtung zum Durchblättern von Menüpunkten
- 7: Prozessoreinheit
- 8: Speichereinheit
- 9: Eingabefeld
- 10: Auswahlelement
- 11: Drehschalter mit Bit-Generator
- 12: Starttaste
- 13: Bestätigungselement
- 14: Informationstaste

## Patentansprüche

1. Steuerung für ein Haushaltgerät, insbesondere ein Gargerät, mit einer Anzeigeeinheit (3) zur Anzeige von Informationen, wobei die Steuerung (1) die Anzeige der Informationen steuert und mit einem Auswahlelement (4) zur Auswahl eines Garprogramms oder einer Betriebsart verbunden ist, wobei die Steuerung (1) ein separates, von dem Auswahlelement (4) verschiedenes, Eingabeelement (5, 14) zum Aufrufen der Informationen aufweist und die Steuerung (1) als Informationen Zustandsparameter des Haushaltgeräts und/oder Erläuterungen zu Gerätefunktionen und/oder Gebrauchsanleitungen anzeigt, wobei die Informationen aus verschiedenen Betriebszuständen des Haushaltgeräts aufrufbar sind und die Steuerung (1) abhängig von dem jeweiligen Betriebszustand unterschiedliche Informationen anzeigt, **dadurch gekennzeichnet, dass** die Informationen in Form von Menüpunkten eines Informationsmenüs vorliegen, dass die Steuerung (1) eine Auswahleinrichtung (6, 11) zum Durchblättern der Menüpunkte aufweist, und dass die Informationen aus jedem Betriebszustand des Haushaltgeräts aufrufbar sind.

2. Steuerung nach Anspruch 1, **dadurch gekennzeichnet, dass** die Auswahleinrichtung (6) dem Eingabeelement (5, 14) entspricht.

3. Steuerung nach Anspruch 1 oder 2, **dadurch gekennzeichnet, dass** die Steuerung (1) für zumindest einen der Menüpunkte das Informationsmenü nach Ablauf einer vorgegebenen Zeitspanne automatisch verlässt/beendet.

4. Steuerung nach Anspruch 2 oder 3, **dadurch gekennzeichnet, dass** nach Durchblättern aller Menüpunkte die Steuerung (1) das Informationsmenü bei Betätigung des Eingabeelements (5, 14) verlässt.

5. Haushaltgerät, insbesondere Gargerät, mit einer Steuerung (1) nach einem der Ansprüche 1 bis 4.

6. Verfahren zum Steuern eines Haushaltgeräts, insbesondere eines Gargeräts, wobei Informationen aufgerufen und auf einer Anzeigeeinrichtung (3) des Haushaltgeräts angezeigt werden, wobei die Informationen durch Betätigen eines separaten Eingabeelements (5, 14), das von einem Auswahlelement (4) zur Auswahl eines Garprogramms oder einer Betriebsart verschieden ist, aufgerufen werden und wobei als Informationen Zustandsparameter des Haushaltgeräts und/oder Erläuterungen zu Gerätefunktionen und/oder Gebrauchsanleitungen angezeigt werden, wobei die Informationen aus verschiedenen Betriebszuständen des Haushaltgeräts aufgerufen werden und abhängig von dem jeweiligen Betriebszustand unterschiedliche Informationen angezeigt werden, **dadurch gekennzeichnet, dass** die Informationen in Form von Menüpunkten eines Informationsmenüs vorliegen, dass die Menüpunkte mit einer Auswahleinrichtung (6, 11) durchgeblättert werden, und dass die Informationen aus jedem Betriebszustand des Haushaltgeräts aufrufbar sind.

7. Verfahren nach Anspruch 6, **dadurch gekennzeichnet, dass** die Menüpunkte mit dem Eingabeelement (5, 14) durchgeblättert werden.

8. Verfahren nach Anspruch 6 oder 7, **dadurch gekennzeichnet, dass** für zumindest einen der Menüpunkte das Informationsmenü nach Ablauf einer vorgegebenen Zeitspanne automatisch verlassen wird.

9. Verfahren nach Anspruch 7 oder 8, **dadurch gekennzeichnet, dass** nach Durchblättern aller Menüpunkte das Informationsmenü bei Betätigung des Eingabeelements (5, 14) verlassen wird. t

## Claims

1. Controller for a domestic appliance, in particular a cooking appliance, with a display unit (3) for display of information, wherein the controller (1) controls the display of the information and is connected to a selection element (4) for the selection of a cooking program or a mode of operation, wherein the controller (1) has a separate input element (5, 14), different from the selection element (4), for calling up the information and the controller (1) displays as information status parameters of the domestic appliance and/or explanations of appliance functions and/or directions for use, wherein the information can be called up from various operating states of the domestic appliance and the controller (1) displays different information as a function of the respective operating state, **characterised in that** the information is present in the form of menu items of an information menu, the controller (1) has a selection device (6, 11) for browsing the menu items, and the information can be called up from any operating state of the domestic appliance.

2. Controller according to claim 1, **characterised in that** the selection device (6) corresponds to the input element (5, 14).

3. Controller according to claim 1 or 2, **characterised in that** the controller (1) exits/terminates the information menu automatically for at least one of the menu items once a predetermined time span has elapsed.

4. Controller according to claim 2 or 3, **characterised in that** after all menu items have been browsed through the controller (1) exits the information menu once the input element (5, 14) has been actuated.

5. Domestic appliance, in particular cooking appliance, with a controller (1) according to one of claims 1 to 4.

6. Method for controlling a domestic appliance, in particular a cooking appliance, wherein information is called up and displayed on a display device (3) of the domestic appliance, wherein the information is called up by actuating a separate input element (5, 14) which is different from a selection element (4) for the selection of a cooking program or a mode of operation and wherein status parameters of the domestic appliance and/or explanations of appliance functions and/or directions for use are displayed as information, wherein the information is called up from various operating states of the domestic appliance and different information is displayed as a function of the respective operating state, **characterised in that** the information is present in the form of menu items of an information menu, the menu items are browsed with a selection device (6, 11), and the information can be called up from any operating state of the domestic appliance.

7. Method according to claim 6, **characterised in that** the menu items are browsed with the input element (5, 14).

8. Method according to claim 6 or 7, **characterised in that** the information menu is exited automatically for at least one of the menu items once a predetermined time span has expired.

9. Method according to claim 7 or 8, **characterised in that** the information menu is exited once the input element (5, 14) has been actuated after all menu items have been browsed through.

## Revendications

1. Commande pour un appareil ménager, en particulier un appareil de cuisson, avec une unité d'affichage (3) en vue de l'affichage d'informations, dans laquelle la commande (1) commande l'affichage des informations et est raccordée à un élément de sélection (4) en vue de la sélection d'un programme de cuisson ou d'un mode de fonctionnement, dans laquelle la commande (1) présente en vue de l'appel des informations un élément de saisie (5, 14) distinct et différent de l'élément de sélection (4) et la commande (1) affiche en tant qu'informations des paramètres d'état de l'appareil ménager et/ou des explications portant sur les fonctions de l'appareil et/ou des consignes d'utilisation, dans lequel les informations peuvent être appelées à partir de différents états de fonctionnement de l'appareil ménager et la commande (1) affiche en fonction de l'état de fonctionnement respectif différentes informations, **caractérisée en ce que** les informations se présentent sous la forme de points de menu d'un menu d'informations, **en ce que** la commande (1) présente un dispositif de sélection (6, 11) en vue de parcourir les points de menu, et **en ce que** les informations peuvent être appelées à partir de chaque état de fonctionnement de l'appareil ménager.

2. Commande selon la revendication 1, **caractérisée en ce que** le dispositif de sélection (6) correspond à l'élément de saisie (5, 14).

3. Commande selon la revendication 1 ou 2, **caractérisée en ce que** la commande (1) quitte/termine automatiquement le menu d'informations après l'écoulement d'un intervalle de temps prédéterminé pour au moins un des points de menu.

4. Commande selon la revendication 2 ou 3, **caractérisée en ce que** la commande (1), après avoir parcouru tous les points de menu, quitte le menu d'informations lors de l'actionnement de l'élément de saisie (5, 14).

5. Appareil ménager, en particulier appareil de cuisson, avec une commande (1) selon l'une des revendications 1 à 4.

6. Procédé destiné à commander un appareil ménager, en particulier un appareil de cuisson, dans lequel des informations sont appelées et affichées sur un dispositif d'affichage (3) de l'appareil ménager, dans lequel les informations sont appelées par le biais de l'actionnement d'un élément de saisie (5, 14) distinct, qui est différent d'un élément de sélection (4) en vue de la sélection d'un programme de cuisson ou d'un mode de fonctionnement, et dans lequel en tant qu'informations des paramètres d'état de l'appareil ménager et/ou des explications portant sur les fonctions de l'appareil et/ou des consignes d'utilisation sont affichés, dans lequel les informations sont appelées à partir de différents états de fonctionnement de l'appareil ménager et différentes informations sont affichées en fonction de l'état de fonctionnement respectif, **caractérisé en ce que** les informations se présentent sous la forme de points de menu d'un menu d'informations, **en ce que** les points de menu sont parcourus avec un dispositif de sélection (6, 11), et **en ce que** les informations peuvent être appelées à partir de chaque état de fonctionnement de l'appareil ménager.

7. Procédé selon la revendication 6, **caractérisé en ce que** les points de menu sont parcourus avec l'élément de saisie (5, 14).

8. Procédé selon la revendication 6 ou 7, **caractérisé en ce que** pour au moins un des points de menu le menu d'informations est quitté automatiquement après l'écoulement d'un intervalle de temps prédéterminé.

9. Procédé selon la revendication 7 ou 8, **caractérisé en ce que** le menu d'informations, après avoir parcouru tous les points de menu, est quitté lors de l'actionnement de l'élément de saisie (5, 14).
